# EUROPÄISCHE PATENTSCHRIFT

(11) **EP 2 061 673 B1**
(45) Veröffentlichungstag und Bekanntmachung des Hinweises auf die Patenterteilung: **06.03.2013**
(21) Anmeldenummer: 07802284.5
(22) Anmeldetag: 12.09.2007
(51) Int. Cl.: B60N 2/28

(54) **KINDERSITZ FÜR FAHRZEUGE**
CHILD'S SEAT FOR VEHICLES
SIEGE D'ENFANT POUR VEHICULES

(30) Priorität: 13.09.2006 DE 102006043760
(43) Veröffentlichungstag der Anmeldung: 27.05.2009
(73) Patentinhaber: Concord GmbH, 95346 Stadtsteinach (DE)
(72) Erfinder: SCHOBERT, Uwe, 95158 Kirchenlamitz (DE); KÖNIG, Walter, 72525 Münsingen (DE)
(74) Vertreter: Morgades y Manonelles, Juan Antonio
(86) Internationale Anmeldenummer: PCT/EP2007/007952
(87) Internationale Veröffentlichungsnummer: WO 2008/031583

(56) Entgegenhaltungen:
- EP-A- 1 122 120
- WO-A-00/40433
- DE-A1-102004 049 754
- FR-A- 2 794 409
- FR-A- 2 890 343

## Beschreibung

Die Erfindung betrifft einen Kindersitz für Fahrzeuge, mit einem Sitzteil, von dem ein Rückenteil nach oben steht, an dem eine Kopfstütze höhenverstellbar angebracht ist.

Ein derartiger Kindersitz ist beispielsweise aus der WO 99/10197 A1 bekannt. Bei diesem bekannten Kindersitz ist das Rückenteil einteilig mit Seitenwangen ausgebildet, so dass sich der Abstand zwischen der Kopfstütze und den Seitenwangen des Rückenteils ändert, wenn die Kopfstütze entlang des Rückenteils verstellt wird. Das bedeutet, dass der Sitzkomfort dieses bekannten Kindersitzes noch Wünsche offen lässt, wenn in einem solchen Kindersitz ein größeres Kind Platz nimmt, weil dann die Seitenwangen des Rückenteiles zwar eventuell noch eine Bruststütze bilden, von den Schultern des Kindes jedoch nach unten beabstandet sind, so dass der Sitzkomfort entsprechend beeinträchtigt sein kann.

Die FR 2 794 409 A, die als nächstliegender Stand der Technik angesehen ist, beschreibt einen Kindersitz für Fahrzeuge, mit einem Sitzteil, von dem ein Rückenteil nach oben wegsteht, an dem eine Kopfstütze höhenverstellbar angebracht ist, wobei mit der Kopfstütze zwei Schulterstützenteile höhenverstellbar verbunden sind. Das Rückenteil ist mit sich nach oben erweiternden Führungen ausgebildet, entlang welchen die beiden Schulterstützenteile derartig geführt sind, dass bei einer Höhenverstellung der Kopfstütze simultan eine Seitenverstellung der Schulterstützenteile erfolgt.

Der Erfindung liegt die Aufgabe zugrunde, einen Kindersitz der eingangs genannten Art zu schaffen, dessen Sitzkomfort verbessert ist.

Diese Aufgabe wird erfindungsgemäß durch die Merkmale des Anspruches 1, d.h. dadurch gelöst, dass mit der Kopfstütze zwei Schulterstützenteile höhenverstellbar verbunden sind, und dass das Rückenteil mit sich nach oben erweiternden Führungen ausgebildet ist, entlang welchen die beiden Schulterstützenteile derartig geführt sind, dass bei einer Höhenverstellung der Kopfstütze gleichzeitig eine Seitenverstellung der Schulterstützenteile erfolgt, wobei zwischen der Kopfstütze mit den Schulterstützteilen und dem Sitzteil eine die Kopfstütze mit den Schulterstützteilen zum Ausfahren und/oder Einfahren beaufschlagende kraftunterstützte Einstelleinrichtung vorgesehen ist.

Wird bei dem erfindungsgemäßen Kindersitz die Kopfstütze entlang des Rückenteiles nach oben verstellt, so führen gleichzeitig die beiden Schulterstützenteile eine

Seitenbewegung nach außen durch. Nachdem größere Kinder entsprechend breitere Schultern besitzen, ergibt sich bei einer Anpassung des Kindersitzes an ein entsprechend großes Kind durch Verstellung der Kopfstütze nach oben gleichzeitig eine Verstellung der Schulterstützenteile seitlich nach außen. Wird die Kopfstütze abgesenkt, so werden die beiden seitlichen Schulterstützenteile entsprechend nach innen verstellt, so dass sich für kleine Kinder eine optimale Anpassung des Kindersitzes ergibt. Der erfindungsgemäße Kindersitz weist also einen guten Komfort auf, der mit verbesserten Sicherheitseigenschaften einhergeht, weil jedes in dem erfindungsgemäßen Kindersitz platznehmende Kind jeder beliebigen Größe in dem Kindersitz eine angepasste Innenkontur vorfindet.

Ein weiterer Vorteil ist, dass das Verstellen des Kindersitzes durch die zwischen der Kopfstütze mit den Schulterstützteilen und dem Sitzteil vorgesehene, die Kopfstütze mit den Schulterstützteilen zum Ausfahren und/oder Einfahren beaufschlagende, kraftunterstützte Einstelleinrichtung mit geringem Kraftaufwand möglich ist.

Bevorzugt ist es bei dem erfindungsgemäßen Kindersitz, wenn die beiden Schulterstützenteile spiegelbildlich symmetrisch ausgebildet sind.

Als zweckmäßig hat es sich erwiesen, wenn das Rückenteil zwei Paare sich nach oben erweiternde Führungen aufweist, die voneinander beabstandet übereinander vorgesehen und zueinander parallel orientiert sind.

Jedes Schulterstützenteil weist zweckmäßigerweise zwei entlang den zugehörigen beiden seitlichen Führungen geführte Führungsorgane auf. Die Führungen sind beispielsweise als Schlitze ausgebildet, in welche die Führungsorgane der Schulterstützenteile spielfrei hineinragen.

Als zweckmäßig hat es sich erwiesen, wenn das Sitzteil nach oben stehende Seitenwangen aufweist und wenn jedes Schulterstützenteil mit einer Seitenwange ausgebildet ist, an der unterseitig eine Verlängerung vorgesehen ist, die in der tiefsten Position der Kopfstütze zur entsprechenden Seitenwange innenseitig benachbart ist. Eine derartige Ausbildung weist den Vorteil auf, dass der lichte Abstand zwischen den beiden Seitenwange des Sitzteiles durch die nach unten stehenden Verlängerungen der beiden Schulterstützenteile reduziert ist, wenn die Kopfstütze ihre tiefste Position einnimmt. Die Kopfstütze wird insbesondere dann auf die tiefste Position eingestellt, wenn in dem erfindungsgemäßen Kindersitz ein entsprechend kleines Kind Platz nimmt. Durch die in der tiefsten Position der Kopfstütze zur entsprechenden Seitenwange innenseitig benachbarten Verlängerungen der Schulterstützenteile ergibt sich der Vorteil, dass ein solches kleines Kind auch im Bereich seines Beckens und seiner Oberschenkel durch die Verlängerungen der Schulterstützenteile einen seitlichen Halt findet. Das ist unter Komfort- und Sicherheitsgesichtspunkten vorteilhaft.

Demselben Zweck ist es dienlich, wenn das Sitzteil innenseitig zwei Halbschalenelemente aufweist, wobei die unterseitigen Verlängerungen der Schulterstützenteile zwischen die Seitenwangen des Sitzteiles und die beiden Halbschalenelemente hineinbewegbar sind. Dabei ist es möglich, den lichten Abstand zwischen den beiden Halbschalenelementen zu reduzieren, wenn die Kopfstütze abgesenkt und dabei gleichzeitig der seitliche Abstand zwischen den Schulterstützenteilen reduziert wird.

Um bei einer Bewegung der Kopfstützen nach oben und folglich der beiden Schulterstützenteile seitlich nach außen gleichzeitig auch eine Bewegung der beiden Halbschalenelemente seitlich nach außen zu bewirken, ist es zweckmäßig, wenn zwischen den beiden Halbschalenelementen mindestens eine Rückstelleinrichtung vorgesehen ist. Desgleichen ist es möglich, dass zwischen den beiden Halbschalenelementen und dem Sitzteil Rückstelleinrichtungen vorgesehen sind. Bei den Rückstelleinrichtungen kann es sich um elastisch federnde Elemente wie Zugfedern, Bänder aus elastischem Material oder dergleichen handeln.

Bei dem erfindungsgemäßen Kindersitz kann das Rückenteil vom Sitzteil starr nach oben wegstehen. Eine andere Möglichkeit besteht darin, dass das Rückenteil am Sitzteil zwischen einer Sitzposition und einer Ruheposition hin und her verschwenkbar angebracht ist. Dabei ist eine Verriegelungseinrichtung dazu vorgesehen, das Rückenteil am Sitzteil in der Sitzposition bzw. in der Ruheposition in Bezug zum Sitzteil zu fixieren. Bei dieser Verschwenkbarkeit kann es sich um eine stufenweise oder um eine kontinuierliche Verschwenkbarkeit handeln.

Erfindungsgemäß kann die Kopfstütze mit den Schulterstützenteilen am Rückenteil schrittweise oder kontinuierlich höhenverstellbar angebracht sein. Eine schrittweise Höhenverstellung einer Kopfstütze ist beispielsweise in der eingangs zitierten WO 99/10197 A1 offenbart.

Die kraftunterstützte Einstelleinrichtung kann als Druckfeder oder als Zugfeder ausgebildet sein. Die Ausbildung der kraftunterstützten Einstelleinrichtung als Druckfeder kann bevorzugt sein, weil das Herunterdrücken der Kopfstütze mit den Schulterstützenteilen durch Einsatz des Körpergewichts unterstützt werden kann. Die Druckfeder kann also einen ergonomischen Vorteil gegenüber der Zugfeder bieten.

Die kraftunterstützte Einstelleinrichtung kann weiter ein lösbares Sperrelement aufweisen. Durch Betätigen des Sperrelements kann die Kopfstütze mit den Schulterstützenteilen innerhalb eines konstruktiv vorgegebenen Verstellbereichs in beliebiger Höhenposition in Bezug auf das Sitzteil fixiert werden.

Es kann weiter vorgesehen sein, dass das Sperrelement eine Betätigungseinrichtung aufweist. Es kann sich dabei beispielsweise um ein mit einem Seilzug oder ein Hebelgestänge mit dem Sperrelement verbundenes Griffstück oder einen Betätigungsknopf oder dergleichen handeln.

Vorteilhafterweise kann die Betätigungseinrichtung im Bereich der Kopfstütze angeordnet sein. Wenn die Betätigungseinrichtung ein Griffstück aufweist, kann das Griffstück vorzugsweise in einer Griffmulde angeordnet sein, die beispielsweise an der Rückseite der Kopfstütze so angeordnet sein kann, dass sich eine Hand zur Höhenverstellung mit dem Handballen auf der Oberseite der Kopfstütze abstützt und einer oder mehrere Finger das Griffstück betätigen. Die Griffmulde ist sowohl bei einer als Druckfeder ausgebildeten kraftunterstützten Einstelleinrichtung als auch bei einer als Zugfeder ausgebildeten kraftunterstützten Einstelleinrichtung vorteilhaft einsetzbar. Wenn die Betätigungseinrichtung einen Betätigungsknopf aufweist, so kann dieser den oberen Abschnitt der Kopfstütze durchgreifend so angeordnet sein, dass er beim Herunterdrücken der Kopfstütze zugleich das Sperrelement der kraftunterstützten Einstelleinrichtung löst. Diese Ausbildung ist besonders vorteilhaft bei der als Druckfeder ausgebildeten kraftunterstützten Einstelleinrichtung. Vorteilhafterweise kann die kraftunterstützte Einstelleinrichtung als eine Gasdruckfeder ausgebildet sein. Bei der Gasdruckfeder handelt es sich um ein hydropneumatisches Verstellelement. Die Gasdruckfeder besteht i. a. aus Druckrohr, Kolbenstange mit Kolben sowie geeigneten Anschlüssen. Sie ist mit einem komprimierten Gas gefüllt, das unter einem voreingestellten Innendruck steht. Die von der Gasdruckfeder ausgeübte Federkraft kann innerhalb physikalischer Grenzen durch die geeignete Wahl des Fülldruckes exakt festgelegt werden. Von Vorteil ist, dass die Federkraft nicht wegabhängig ist, und dass die Gasfüllung zugleich als Dämpfungselement wirkt.

Um den erfindungsgemäßen Kindersitz einfach und zuverlässig an einem Fahrzeugsitz eines Fahrzeuges festlegen zu können, ist es bevorzugt, wenn zumindest das Sitzteil mit Gurtführungsausnehmungen ausgebildet ist. Dabei dient ein Beckengurt des entsprechenden Fahrzeuges zur Festlegung des Kindersitzes. Soll der erfindungsgemäße Kindersitz auch am Diagonalgurt eines Dreipunktgurtes eines Fahrzeuges festgelegt werden, so ist es zweckmäßig, wenn die Kopfstütze Seitenwangen aufweist, zwischen deren Unterrand und dem Oberrand der Seitenwangen der beiden Schulterstützenteile Gurtführungsschlitze für den Diagonalgurt vorgesehen sind.

Weitere Einzelheiten, Merkmale und Vorteile ergeben sich aus der nachfolgenden Beschreibung eines in der Zeichnung dargestellten Ausführungsbeispieles des erfindungsgemäßen Kindersitzes.

Es zeigen:
- Figur 1: eine Vorderansicht des Kindersitzes, wobei die Kopfstütze ihre tiefste Position einnimmt,
- Figur 2: eine der Figur 1 ähnliche Vorderansicht des Kindersitzes, wobei die Kopfstütze mit den mit der Kopfstütze verbundenen Schulterstützenteilen eine mittlere Höhenposition einnimmt,
- Figur 3: eine den Figuren 1 und 2 ähnliche Vorderansicht des Kindersitzes, wobei die Kopfstütze mit den Schulterstützenteilen die höchste Position in Bezug zum Sitzteil einnehmen,
- Figur 4: eine Seitenansicht des Kindersitzes gemäß Figur 1,
- Figur 5: eine Seitenansicht des Kindersitzes gemäß Figur 2,
- Figur 6: eine Seitenansicht des Kindersitzes gemäß Figur 3,
- Figur 7: eine Ansicht des Kindersitzes gemäß den Figuren 1 und 4 in Blickrichtung von hinten,
- Figur 8: den Kindersitz gemäß den Figuren 2 und 5 in Blickrichtung von hinten,
- Figur 9: den Kindersitz gemäß den Figuren 3 und 6 in Blickrichtung von hinten,
- Figur 10: eine perspektivische Ansicht des Kindersitzes gemäß den Figuren 1, 4 bzw. 7 in Blickrichtung von schräg oben,
- Figur 11: eine perspektivische Ansicht des Kindersitzes gemäß den Figuren 2, 5 bzw. 8 in Blickrichtung von schräg oben,
- Figur 12: eine perspektivische Ansicht des Kindersitzes gemäß den Figuren 3, 6 bzw. 9 in Blickrichtung von schräg oben,
- Figur 13: eine schematische Querschnittdarstellung durch ein Sitzteil, das innenseitig zwei Halbschalenelemente aufweist, und durch abgeschnitten gezeichnete Verlängerungen, die von den Schulterstützenteilen unterseitig wegstehen,
- Figur 14: eine der Figur 13 ähnliche Darstellung, wobei die beiden unterseitigen Verlängerungen der Schulterstützenteile zwischen die Seitenwangen des Sitzteiles und die beiden Halbschalenelemente hineinbewegt sind,
- Figur 15: eine perspektivische Ansicht eines zweiten Ausführungsbeispiels des Kindersitzes, wobei die Kopfstütze ihre tiefste Position einnimmt, und
- Figur 16: eine perspektivische Ansicht gemäß Fig. 15, wobei die Kopfstütze mit den Schulterstützenteilen die höchste Position in Bezug zum Sitzteil einnehmen.

Die Figuren zeigen einen Kindersitz 10 - ohne Bezug -, um die wesentlichen Einzelheiten des Kindersitzes 10 zu verdeutlichen.

Der Kindersitz 10 weist ein Sitzteil 12, von dem Seitenwangen 14 nach oben stehen, ein Rückenteil 16, das vom Sitzteil 12 nach oben wegsteht, sowie eine Kopfstütze 18 und zwei Schulterstützenteile 20 auf. Die beiden Schulterstützenteile 20 sind spiegelbildlich symmetrisch ausgebildet und mit der Kopfstütze 18 höhenverstellbar verbunden.

Das Rückenteil 16 ist mit zwei Paaren 22 von sich nach oben erweiternden Führungen 24 und 26 ausgebildet. In die Führungen 24 stehen spielfrei Führungsorgane 28 und in die Führungen 26 stehen spielfrei Führungsorgane 30 hinein. Die Führungsorgane 28 und 30 sind am jeweils zugehörigen Schulterstützenteil 20 vorgesehen.

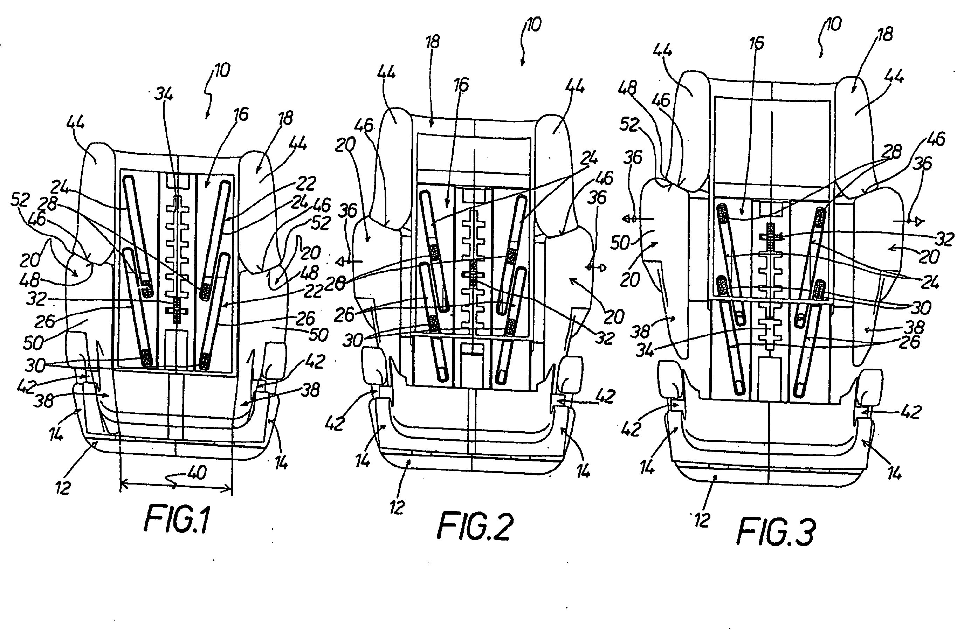

Die Baueinheit, bestehend aus der Kopfstütze 18 und den beiden Schulterstützenteilen 20, weist eine Verriegelungseinrichtung 32 auf, mit deren Hilfe die besagte Einheit aus der Kopfstütze 18 und den beiden Schulterstützenteilen 20 entlang einer Führung 34 des Rückenteiles 16 schrittweise höhenverstellbar und in der jeweiligen Höhenposition fixierbar ist. Durch die sich nach oben erweiternden Führungen 24 und 26 führen die beiden Schulterstützenteile 20 bei einer Höhenverstellung der Kopfstütze 18 gleichzeitig eine Seitenbewegung durch, die in den Figuren 2 und 3 durch die Pfeile 36 angedeutet ist. Auf diese Weise ergibt sich für Kinder unterschiedlicher Größen jeweils eine optimale Anpassung des Kindersitzes 10 nicht nur bezüglich der Kopfstütze 18 an den Kopf des Kindes sondern auch eine Anpassung der Schulterstützenteile 20 an den Schulterbereich des jeweiligen Kindes.

Jedes Schulterstützenteil 20 ist unterseitig mit einer Verlängerung 38 (siehe bspw. Figur 3) versehen, die in der tiefsten Position der Kopfstütze 18 - wie sie in Figur 1 verdeutlicht ist - zur entsprechenden Seitenwangen 14 innenseitig benachbart ist, so dass der lichte Innenabstand zwischen den Seitenwangen 14 entsprechend reduziert ist. Dieser lichte Innenabstand ist in Figur 1 durch den Pfeil 40 verdeutlicht. Auf diese Weise findet ein im Kindersitz 10 befindliches kleines Kind in der in Figur 1 gezeichneten Stellung der Kopfstütze 18 und der beiden Schulterstützenteile 20 durch die Verlängerungen 38 der Schulterstützenteile 20 auch mit seinem Beckenbereich und seinen Oberschenkeln einen guten Seitenhalt, so dass ein guter Sitzkomfort bei guten Sicherheitseigenschaften gegeben ist.

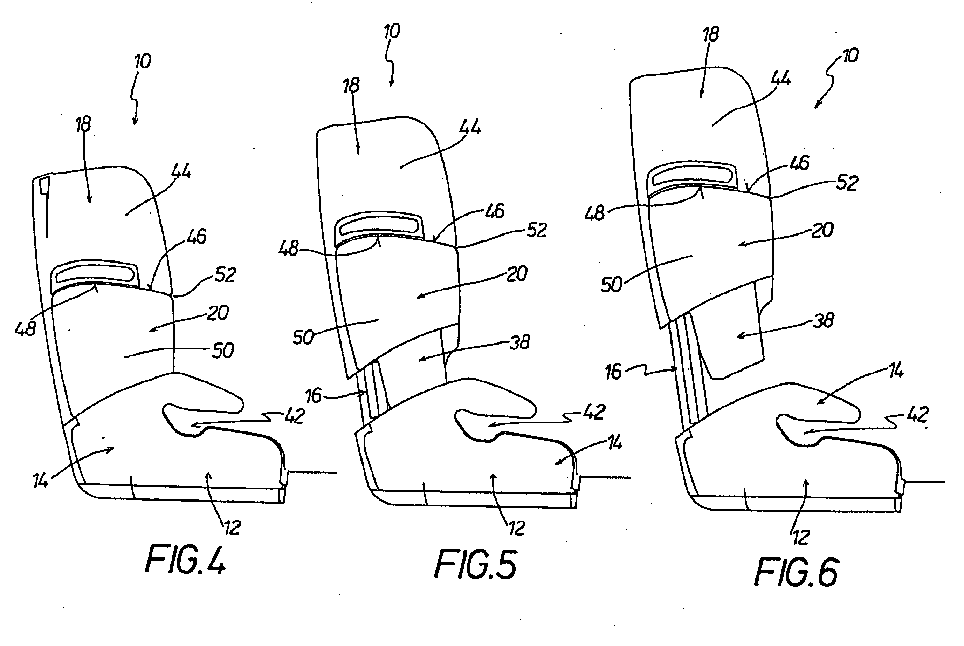

Wie aus den Figuren 4, 5 und 6 ersichtlich ist, ist das Sitzteil 12 an seinen Seitenwangen 14 mit Gurtführungsausnehmungen 42 ausgebildet. Diese Gurtführungsausnehmungen 42 dienen zum Aufnehmen eines Beckengurtes eines Fahrzeugsicherheitsgurtes.

Die Kopfstütze 18 weist Seitenwangen 44 auf, zwischen deren Unterrand 46 und dem Oberrand 48 der Seitenwangen 50 der Schulterstützteile 20 jeweils ein Gurtführungsschlitz 52 für einen Diagonalgurt eines Fahrzeugsicherheitsgurts vorgesehen ist.

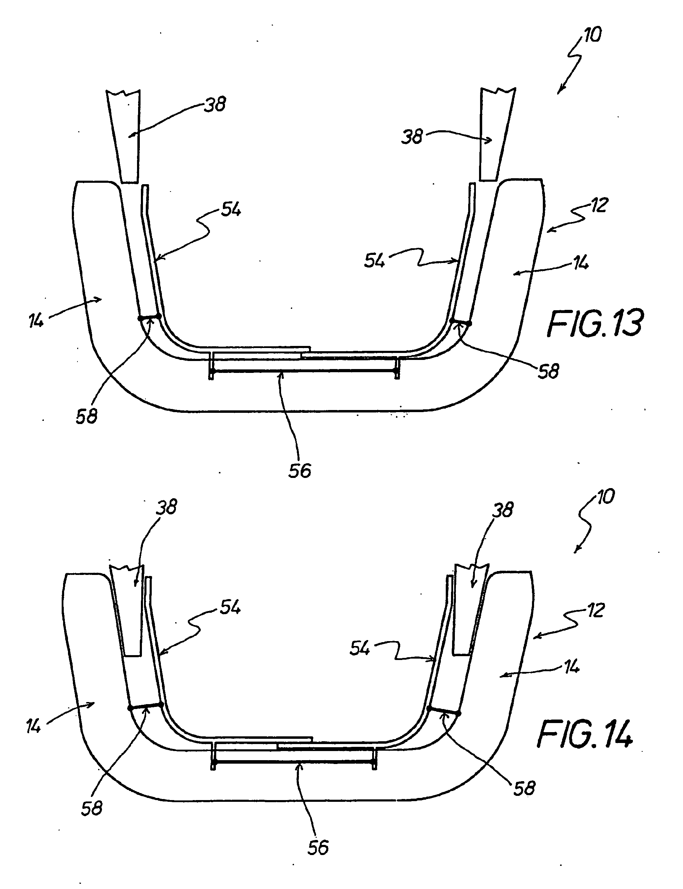

Figur 13 verdeutlicht ein Sitzteil 12 eines Kindersitzes 10, wobei das Sitzteil 12 innenseitig zwei Halbschalenelemente 54 aufweist. Zwischen den beiden Halbschalenelementen 54 ist eine Rückstelleinrichtung 56 vorgesehen, die beispielsweise von mindestens einer Zugfeder oder von mindestens einem elastischen Band gebildet ist.

Mit der Bezugsziffer 58 sind Rückstelleinrichtungen bezeichnet, die zwischen den Halbschalenelementen 54 und dem Sitzteil 12 vorgesehen sind. Auch diese Rückstelleinrichtungen 58 können von Zugfedern, elastischen Bändern oder dergleichen gebildet sein.

Mit der Bezugsziffer 38 sind in Figur 13 die Verlängerungen bezeichnet, die von den Seitenwangen 50 der Schulterstützenteile 20 (siehe beispielsweise die Figuren 1, 2 oder 3) unterseitig wegstehen. In Figur 13 sind die Verlängerungen 38 von den Seitenwangen 14 des Sitzteiles 12 und den Halbschalenelementen 54 beabstandet, d.h. geringfügig über diesen positioniert, so dass die Rückstelleinrichtungen 56, 58 die Halbschalenelemente 54 an die Seitenwangen 14 des Sitzteiles 12 anlegen. Der lichte Abstand zwischen den beiden Halbschalenelementen 54 ist also entsprechend groß. Demgegenüber verdeutlicht die Figur 14 einen Zustand des Kindersitzes 10, wobei die beiden Verlängerungen 38 zwischen die Seitenwangen 14 des Sitzteiles 12 und die beiden Halbschalenelemente 54 hineinbewegt sind, so dass der lichte Abstand zwischen den beiden Halbschalenelementen 54 entsprechend reduziert ist. Die Rückstelleinrichtungen 56 und 58 sind in diesem Zustand des Kindersitzes 10 mechanisch gespannt.

Wird die Kopfstütze 18 (siehe beispielsweise die Figuren 1 bis 3) von einer tiefen Position in eine erhöhte Position hochbewegt, so werden gleichzeitig die Verlängerungen 38 wieder nach oben und seitlich nach außen bewegt und aus dem Spaltraum zwischen den Seitenwangen 14 des Sitzteiles 12 und den Halbschalenelementen 54 herausbewegt, so dass sich die Rückstelleinrichtungen 56 und 58 wieder mechanisch entspannen können und die Halbschalenelemente 54 seitlich nach außen bewegt werden. Der lichte Abstand zwischen den beiden Halbschalenelementen 54 vergrößert sich wieder entsprechend.

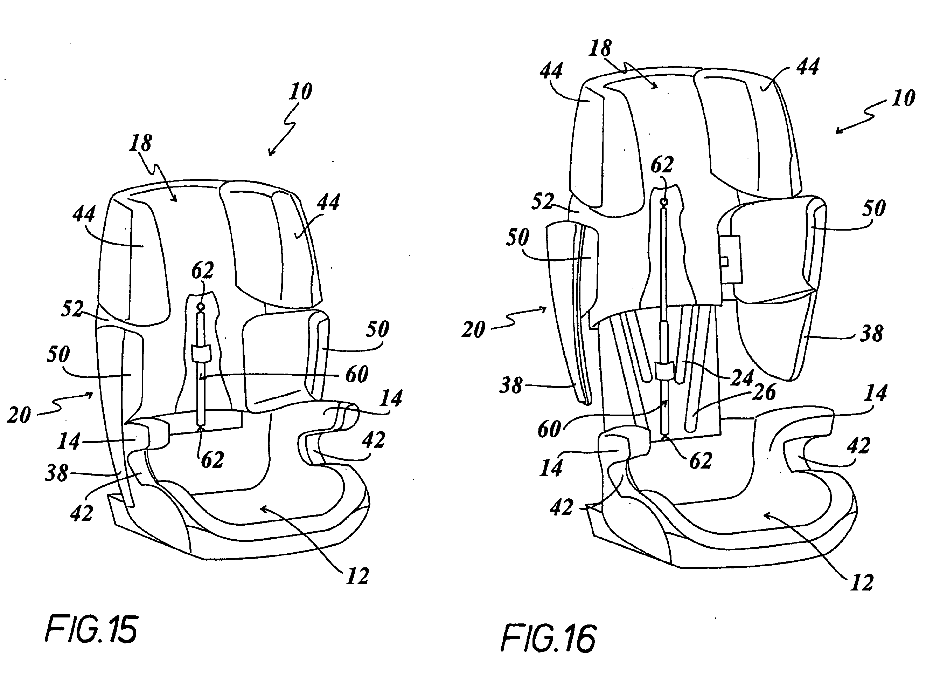

Figur 15 und 16 zeigen nun einen Kindersitz 10, bei dem eine kraftunterstützte Einstelleinrichtung 60 zwischen der Baueinheit, bestehend aus der Kopfstütze 18 und den beiden Schulterstützenteilen 20, und dem Sitzteil 12 angeordnet ist. Bei der kraftunterstützten Einstelleinrichtung 60 handelt es sich in dem in Figur 15 und 16 dargestellten Ausführungsbeispiel um eine Gasdruckfeder 60, die als Druckfeder ausgeführt ist. Die Gasdruckfeder 60 wird gespannt, wenn der Kindersitz 10 von der in der Figur 16 dargestellten Position, in der die Kopfstütze 18 mit den Schulterstützenteilen 20 die höchste Position in Bezug zum Sitzteil 12 einnimmt, in die in Figur 15 dargestellte Postion gebracht wird, in der die Kopfstütze 18 ihre tiefste Position einnimmt. Der Kindersitz 10 kann also ohne Kraftaufwand von der in Figur 15 dargestellten tiefsten Höhenposition der Kopfstütze 18 in die in Figur 16 dargestellte höchste Höhenposition der Kopfstütze 18 verstellt werden, indem, wie weiter unten beschrieben, die Gasdruckfeder 60 entriegelt wird.

Die Gasdruckfeder 60 weist an ihren beiden Endabschnitten Befestigungselemente 62 auf, die beispielsweise als Befestigungsösen ausgebildet sein können. Die Befestigungselemente 62 sind mit dem hinteren oberen Abschnitt des Sitzes 12 bzw. mit dem hinteren Abschnitt der Kopfstütze 18 verbunden, beispielsweise durch die Befestigungselemente 62 durchgreifende Befestigungsschrauben. Die Kopfstütze 18 und die Schulterstützenteile 20 bilden eine höhenverstellbare Baugruppe.

Die Gasdruckfeder 60 kann über ein in Figur 15 und 16 nicht dargestelltes Sperrelement mit Betätigungseinrichtung verriegelt und entriegelt werden. Diese Verriegelungsvorrichtung kann so ausgebildet sein, dass die Gasdruckfeder 60 in beliebiger Stellung feststellbar ist, z. B. durch ein Handgriffelement als Teil der Betätigungseinrichtung. Der Kindersitz 10 ist damit kontinuierlich höhenverstellbar, d. h. die Sitzposition kann dann jeweils durch Betätigung des Handgriffelements eingestellt werden.

Die Betätigungseinrichtung kann jedoch auch so ausgeführt sein, dass sie eine Fernbetätigung des an der Gasdruckfeder 60 angeordneten Sperrelements ermöglicht. Es kann hierzu zum Beispiel ein Seilzug zwischen dem Handgriffelement und dem Sperrelement vorgesehen sein. Das Handgriffelement kann beispielsweise in einer Griffmulde angeordnet sein, die an der Rückseite der Kopfstütze 18 ausgebildet sein kann, und der Seilzug kann in der Kopfstütze 18 geführt sein.

Es kann aber auch vorgesehen sein, dass der Kindersitz 10 mit Hilfe einer mehrere Raststellungen aufweisenden Verriegelungseinrichtung 32, wie sie in Figur 1 bis 3 gezeigt ist, schrittweise höhenverstellbar ausgebildet ist. Es ist in diesem Fall möglich, auf die oben beschriebene Verriegelung der Gasdruckfeder 60 zu verzichten. Alternativ kann jedoch auch das Sperrelement der Gasdruckfeder 60 in Verbindung mit der die Raststellungen aufweisenden Verriegelungseinrichtung 32 vorgesehen sein, um Stellungen zwischen den Raststellungen einzustellen.

Weiter ist es möglich, die Gasdruckfeder 60 als eine Zugfeder auszubilden. Bei dieser Ausführungsvariante ist die Gasdruckfeder 60 gespannt, wenn die Kopfstütze 18 ihre höchste Höhenposition einnimmt, wie in Figur 16 dargestellt. Der Kindersitz 10 kann also ohne Kraftaufwand von der in Figur 16 dargestellten höchsten Höhenposition der Kopfstütze 18 in die in Figur 15 dargestellte tiefste Höhenposition der Kopfstütze 18 verstellt werden, indem die Gasdruckfeder 60 entriegelt wird.

Es ist auch möglich, an Stelle der Gasdruckfeder eine mechanische Feder, beispielsweise eine Schraubenfeder, vorzusehen. Allerdings ist bei einer mechanischen Feder die Federkraft von der Auslenkung abhängig und nicht wie bei der Gasdruckfeder annähernd konstant.

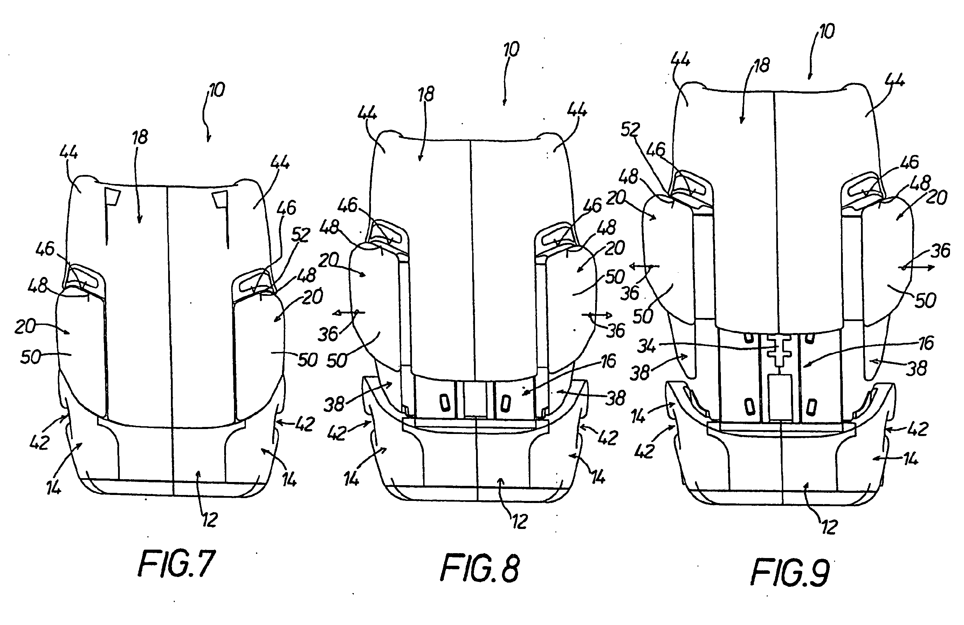

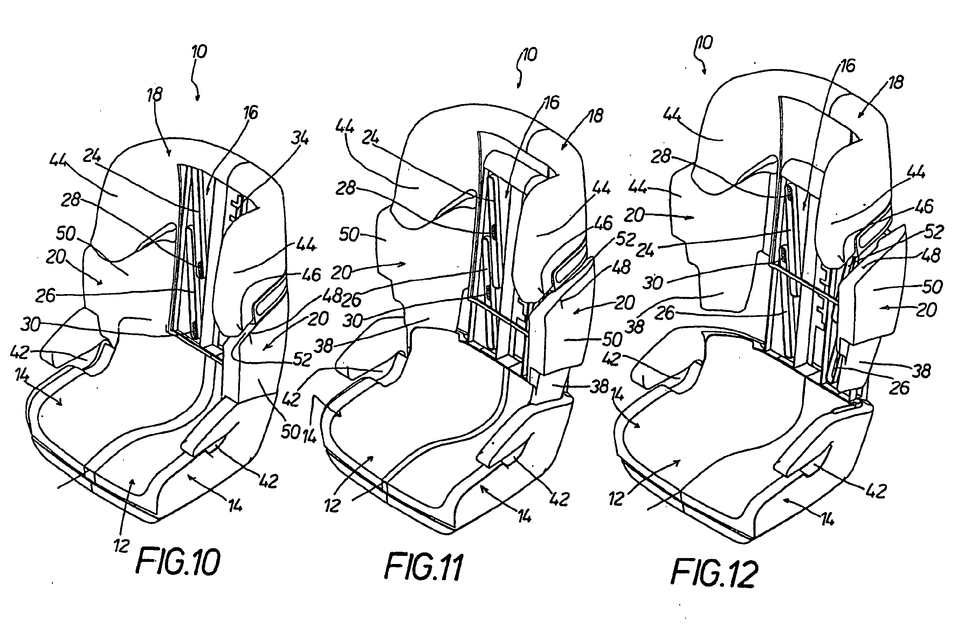

Gleiche Einzelheiten sind in den Figuren 1 bis 16 jeweils mit denselben Bezugsziffern bezeichnet, so dass es sich erübrigt, in Verbindung mit den Figuren alle Einzelheiten jeweils detailliert zu beschreiben.

## Patentansprüche

1. Kindersitz für Fahrzeuge, mit einem Sitzteil (12), von dem ein Rückenteil (16) nach oben wegsteht, an dem eine Kopfstütze (18) höhenverstellbar angebracht ist, wobei
mit der Kopfstütze (18) zwei Schulterstützenteile (20) höhenverstellbar
verbunden sind, und wobei das Rückenteil (16) mit sich nach oben erweiternden Führungen (24, 26) ausgebildet ist, entlang welchen die beiden Schulterstützenteile (20) derartig geführt sind, dass bei einer Höhenverstellung der Kopfstütze (18) simultan eine Seitenverstellung (Pfeile 36) der
Schulterstützenteile (20) erfolgt, **dadurch gekennzeichnet,**
**dass** zwischen der Kopfstütze (18) mit den Schulterstützenteilen (20) und dem Sitzteil (12) eine die Kopfstütze (18) mit den Schulterstützenteilen zum Ausfahren und/oder Einfahren beaufschlagende kraftunterstützte Einstelleinrichtung (60) vorgesehen ist.

2. Kindersitz nach Anspruch 1,
**dadurch gekennzeichnet,**
**dass** die kraftunterstützte Einstelleinrichtung (60) als Druckfeder oder als Zugfeder ausgebildet ist.

3. Kindersitz nach Anspruch 1 oder 2,
**dadurch gekennzeichnet,**
**dass** die kraftunterstützte Einstelleinrichtung eine lösbares Sperrelement aufweist.

4. Kindersitz nach Anspruch 3,
**dadurch gekennzeichnet,**
**dass** das Sperrelement eine Betätigungseinrichtung aufweist.

5. Kindersitz nach Anspruch 4,
**dadurch gekennzeichnet,**
**dass** die Betätigungseinrichtung im Bereich der Kopfstütze (18) angeordnet ist, vorzugsweise in einer Griffmulde angeordnet ist.

6. Kindersitz nach Anspruch 5,
**dadurch gekennzeichnet,**
**dass** die Betätigungseinrichtung ein Handgriffelement aufweist, wobei ein Seilzug zwischen dem Handgriffelement und dem Sperrelement vorgesehen ist.

7. Kindersitz nach einem der Ansprüche 1 bis 6,
**dadurch gekennzeichnet,**
**dass** die kraftunterstützte Einstelleinrichtung (60) als eine Gasdruckfeder ausgebildet ist.

8. Kindersitz nach einem der Ansprüche 1 bis 7,
**dadurch gekennzeichnet,**
**dass** das Rückenteil (16) am Sitzteil (12) zwischen einer Sitz- und einer Ruheposition hin und her verschwenkbar angebracht ist.

9. Kindersitz nach einem der Ansprüche 1 bis 8,
**dadurch gekennzeichnet,**
**dass** die Verschwenkbarkeit kontinuierlich oder stufenweise ausgebildet ist.

10. Kindersitz nach einem der Ansprüche 1 bis 9,
**dadurch gekennzeichnet,**
**dass** die Kopfstütze (18) mit den Schulterstützenteilen (20) am Rückenteil (16) schrittweise höhenverstellbar angebracht ist.

11. Kindersitz nach einem der Ansprüche 1 bis 10,
**dadurch gekennzeichnet,**
**dass** die Kopfstütze (18) mit den Schulterstützenteilen (20) am Rückenteil (16) kontinuierlich höhenverstellbar angebracht ist.

12. Kindersitz nach einem der Ansprüche 1 bis 11,
**dadurch gekennzeichnet,**
**dass** das Sitzteil (12) nach oben stehende Seitenwangen (14) aufweist, und dass jedes Schulterstützenteil (20) mit einer Seitenwange (50) ausgebildet ist, an der unterseitig eine Verlängerung (38) vorgesehen ist, die in der tiefsten Position der Kopfstütze (18) zur entsprechenden Seitenwange (14) des Sitzteiles (12) innenseitig benachbart ist.

13. Kindersitz nach Anspruch 12,
**dadurch gekennzeichnet,**
**dass** das Sitzteil (12) innenseitig zwei Halbschalenelemente (54) aufweist, wobei die unterseitigen Verlängerungen (38) der Schulterstützenteile (20) zwischen die Seitenwangen (14) des Sitzteiles (12) und die Halbschalenelemente (54) hineinbewegbar sind.

14. Kindersitz nach Anspruch 13,
**dadurch gekennzeichnet,**
**dass** zwischen den beiden Halbschalenelementen (54) mindestens eine Rückstelleinrichtung (56) vorgesehen ist.

15. Kindersitz nach 13,
**dadurch gekennzeichnet,**
**dass** zwischen den beiden Halbschalenelementen (54) und dem Sitzteil (12) Rückstelleinrichtungen (58) vorgesehen sind.

## Claims

1. Child's seat for vehicles with a seat portion (12) from which a backrest (16) protrudes vertically, with a height-adjustable headrest (18) attached,
**characterised by** the fact that,
two height-adjustable shoulder supporting elements (20) are joined to the headrest (18), the backrest (16) being equipped with upwardly extending guides (24, 26), along which both shoulder supporting elements (20) are guided so that when the height of the headrest (18) is adjusted there is a simultaneous lateral displacement (arrows 36) of the shoulder supporting elements (20), which are provided with an assisted adjustment device (60) between the headrest (18) with the shoulder supporting elements (20) and the seat portion (12) that activates the headrest (18) with the shoulder supporting elements to slide it outwards and/or inwards.

2. Child's seat according to claim 1,
**characterised by** the fact that,
the assisted adjustment device (60) is in the form of a compression spring or tension spring.

3. Child's seat according to claim 1 or 2,
**characterised by** the fact that,
the assisted adjustment device has a releasable locking element.

4. Child's seat according to claim 3,
**characterised by** the fact that,
the locking element has an actuating device.

5. Child's seat according to claim 4,
**characterised by** the fact that,
the actuating device is installed in the area of the headrest (18), preferably in a recessed handle.

6. Child's seat according to claim 5,
**characterised by** the fact that,
the actuating device has a handle element, a drive cable being provided between the handle element and the locking element.

7. Child seat according to any of the claims 1 to 6,
**characterised by** the fact that,
the assisted adjustment device (60) is in the form of a gas pressure spring.

8. Child seat according to any of the claims 1 to 7,
**characterised by** the fact that,
the backrest (16) is attached to the seat portion (12) in such a way that it can be pivoted from a sitting position to a resting position.

9. Child seat according to any of the claims 1 to 8,
**characterised by** the fact that,
the pivoting movement can be continuous or by steps.

10. Child seat according to any of the claims 1 to 9,
**characterised by** the fact that,
the headrest (18) with the shoulder supporting elements (20) is attached to the backrest (16) in such a way as to be gradually adjusted in height.

11. Child seat according to any of the claims 1 to 10,
**characterised by** the fact that,
the headrest (18) with the shoulder supporting elements (20) is attached to the backrest (16) in such a way as to be continuously adjusted in height.

12. Child seat according to any of the claims 1 to 11,
**characterised by** the fact that,
the seat portion (12) has lateral projection (14) that project upwards, and each shoulder supporting element (20) is provided with a side projection (5) at the bottom of which is provided an extension (38) which, in the lowest position of the headrest (18) is adjacent, on the inside, to the side projection (14) corresponding to the seat portion (12).

13. Child's seat according to claim 12,
**characterised by** the fact that,
the seat portion (12), on the inside, has two half-shell-shaped elements (54), such that the extensions (38) on the lower side of the shoulder supporting elements (20) can be inserted between the side projections (14) of the seat portion (12) and the half-shell-shaped elements (54).

14. Child's seat according to claim 13,
**characterised by** the fact that,
at least one resetting device (58) is provided between the two half-shell-shaped elements (54).

15. Child's seat according to claim 13,
**characterised by** the fact that,
the resetting devices (58) are provided between both half-shell-shaped elements (54) and the seat portion (12).

## Revendications

1. L'invention concerne un siège d'enfant pour véhicules, qui présente une partie de siège (12) à partir de laquelle se dresse vers le haut un dossier (16), sur lequel est fixé un appuie-tête (18) réglable en hauteur,
**caractérisé en ce que**,
deux éléments d'appui pour les épaules (20) sont assemblés de manière réglable en hauteur à l'appuie-tête (18), le dossier (16) étant pourvu de guides (24, 26) qui se prolongent vers le haut, le long desquels les deux éléments d'appui pour les épaules (20) sont guidés de telle sorte qu'un réglage en hauteur de l'appuie-tête (18) s'accompagne d'un réglage latéral simultané (flèches 36) des éléments d'appui pour les épaules (20), sur lequel est prévu un dispositif de réglage assisté (60) entre l'appuie-tête (18) avec les éléments d'appui pour les épaules (20) et la partie de siège (12) qui active l'appuie-tête (18) avec les éléments d'appui pour les épaules pour le coulisser vers l'extérieur et/ou l'intérieur.

2. Siège d'enfant selon la revendication 1,
**caractérisé en ce que**,
le dispositif de réglage assisté (60) est réalisé comme un ressort à compression ou un ressort à traction.

3. Siège d'enfant selon la revendication 1 ou 2,
**caractérisé en ce que**,
le dispositif de réglage assisté présente un élément de blocage qui peut être libéré.

4. Siège d'enfant selon la revendication 3,
**caractérisé en ce que**,
l'élément de blocage présente un dispositif d'actionnement.

5. Siège d'enfant selon la revendication 4,
**caractérisé en ce que**,
le dispositif d'actionnement est disposé dans la zone de l'appuie-tête (18), de préférence dans une poignée enfoncée.

6. Siège d'enfant selon la revendication 5,
**caractérisé en ce que**,
le dispositif d'actionnement présente un élément de manche, un câble d'actionnement étant prévu entre l'élément de manche et l'élément de blocage.

7. Siège d'enfant selon n'importe laquelle des revendications 1 à 6,
**caractérisé en ce que**,
le dispositif de réglage assisté (60) est réalisé comme un ressort à pression à gaz.

8. Siège d'enfant selon n'importe laquelle des revendications 1 à 7,
**caractérisé en ce que**,
le dossier (16) est disposé sur la partie de siège (12) de forme basculante entre une position de siège et une de repos.

9. Siège d'enfant selon n'importe laquelle des revendications 1 à 8,
**caractérisé en ce que**,
la possibilité de basculement est réalisée de forme continue ou échelonnée.

10. Siège d'enfant selon n'importe laquelle des revendications 1 à 9,
**caractérisé en ce que**,
l'appuie-tête (18) avec les éléments d'appui pour les épaules (20) est disposé sur le dossier (16) de forme réglable en hauteur de manière graduelle.

11. Siège d'enfant selon n'importe laquelle des revendications 1 à 10,
**caractérisé en ce que**,
l'appuie-tête (18) avec les éléments d'appui pour les épaules (20) est disposé sur le dossier (16) de forme réglable en hauteur de manière continue.

12. Siège d'enfant selon n'importe laquelle des revendications 1 à 11,
**caractérisé en ce que**,
la partie de siège (12) présente des saillies latérales (14) qui dépassent vers le haut, et chaque élément d'appui pour les épaules (20) est doté d'une saillie latérale (5) sur la partie inférieure de laquelle est prévu un prolongement (38) qui, sur la position la plus basse de l'appuie-tête (18), est contigu, par la partie intérieure, à la saillie latérale (14) correspondante de la partie de siège (12).

13. Siège d'enfant selon la revendication 12,
**caractérisé en ce que**,
la partie de siège (12) présente par la partie intérieure deux éléments en forme de demi-coquille (54), de telle sorte que les prolongements (38) sur le côté inférieur des éléments d'appui pour les épaules (20) peuvent être introduits entre les saillies latérales (14) de la partie de siège (12) et les éléments en forme de demi-coquille (54).

14. Siège d'enfant selon la revendication 13,
**caractérisé en ce que**,
entre les deux éléments en forme de demi-coquille (54) est prévu au moins un dispositif de réenclenchement (58).

15. Siège d'enfant selon la revendication 13,
**caractérisé en ce que**,
entre les deux éléments en forme de demi-coquille (54) et la partie de siège (12) sont prévus des dispositifs de réenclenchement (58).
